# EUROPEAN PATENT SPECIFICATION

(11) **EP 1 200 778 B1**
(45) Date of publication and mention of the grant of the patent: **24.03.2004**
(21) Application number: 00956376.8
(22) Date of filing: 21.07.2000
(51) Int. Cl.: F23G 5/26, C04B 7/43, F27B 7/20

(54) **METHOD AND APPARATUS FOR INCINERATION OF COMBUSTIBLE WASTE DURING THE MANUFACTURE OF CEMENT CLINKER**
VERFAHREN UND VORRICHTUNG ZUR VERBRENNUNG VON BRENNBAREN ABFÄLLEN BEI DER HERSTELLUNG VON ZEMENTKLINKER
PROCEDE ET APPAREIL D'INCINERATION DE DECHETS COMBUSTIBLES LORS DE LA PRODUCTION DE CLINKER

(30) Priority: 30.07.1999 DK 991079
(43) Date of publication of application: 02.05.2002
(73) Proprietor: F.L. Smidth & Co. A/S, DK-2500 Valby, Copenhagen (DK)
(72) Inventor: HELM, Alexander, DK-2500 Valby (DK)
(74) Representative: Brunner, Michael John
(86) International application number: PCT/EP2000/007467
(87) International publication number: WO 2001/009548

(56) References cited:
- EP-A- 0 582 394
- DE-A- 3 411 144
- US-A- 4 295 823

## Description

The present invention relates to a method for incineration of combustible waste during the manufacture of cement clinker where cement raw meal is preheated and calcined in a preheater, burned into clinker in a kiln and cooled in a subsequent clinker cooler. More particularly it relates to a method in which the waste is incinerated in a separate compartment subject to simultaneous supply of hot air, the exhaust gases produced during the waste incineration process being vented to the preheater for heating the cement raw meal, and the slag generated during the waste incineration process is extracted from the compartment.

The invention also relates to an apparatus for carrying out the method.

Such a method and apparatus is known e.g. by EP-A-582 394.

Examples of combustible waste include tyres, furniture, carpets, wood refuse, garden waste, kitchen waste, paper sludge, sewage sludge, and bleaching earth.

In DK patent application No. 1201/92, the contents of which are incorporated herein by reference, a method is disclosed in which the waste and cement raw meal are introduced at one end of the compartment and extracted at the other end, the transport takes place on specifically provided supporting surfaces and the waste slag and the cement raw meal are supplied into the calciner section of the preheater. In a preferred embodiment of this known method, the supporting surface consists of a grate surface with through-going slits through which the hot airstream from the clinker cooler passes and is directed up through the waste stream.

In actual practice, a number of disadvantages have been ascertained in relation to the mentioned system which involves input of material at one end of the compartment and extraction at the other end. In this context, a specific problem arises in that the temperature of the supporting surface may remain at a relatively low level at one end where input of fresh material is taking place whereas a relatively high temperature may be experienced at the other end after initiation of the incineration process. This has given rise to quite serious design problems in regard to thermal expansion, selection of material etc., because of the need to customize the apparatus for different types of waste, entailing variations in temperature cycles. From the viewpoint of design, the supporting surface should advantageously be configured for a reasonably constant operating temperature. Also, it would be desirable, particularly in regard to the incineration of a waste type with a high moisture content, to expel some of the heat from the hot end to allow it to be utilized at the cold end where the need for drying is much greater. Also the embodiment of the supporting surface comprising through-going slits for the passage of hot air from the clinker cooler has proved to entail shortcomings, since, not surprisingly, the raw meal fed into the compartment according to this method notoriously tends to sift through the slits. Any attempt to remedy this problem by allowing the airstream to pass the slits at a high velocity will only result in the undesirable need for a substantial pressure differential to drive the air through the slits. A further disadvantage relating to the known method concerns the overall control of retention time of the waste in the compartment which requires a system of movable and stationary grate elements, the design of which is complicated by the temperature variations occurring when operation is switched between the different types of waste.

An object of the present invention is to provide a method as well as an apparatus for incineration of waste during the manufacture of cement clinker by which the aforementioned disadvantages are remedied or significantly reduced.

According a first aspect of the present invention, this is achieved by a method of the kind mentioned in the introduction, **characterized in that** the waste is introduced via a waste inlet onto a supporting surface incorporated in the compartment and in that, subject to simultaneous incineration, the waste is transported through the compartment to the outlet of the compartment along a circular path.

According to a second aspect of the present invention, there is provided an apparatus for incineration of combustible waste comprising a raw meal store, a preheater with a calciner. a kiln, a clinker cooler, a compartment for incineration of the waste, and an air duct for supplying hot air to the compartment, which compartment comprises an inlet for introducing the waste into the compartment and an outlet for extracting slag and any unburned waste, **characterized in that** the compartment further comprises a supporting surface for supporting the waste during incineration and means fortransporting the waste from the waste inlet to the outlet of the compartment along a circular path.

Thus an apparatus is obtained which is distinguished by its simplicity from the viewpoint of design but also by the ability to dry wet waste, avoid fall-through of waste and possibly raw meal, while enhancing the potential to control the retention time of the waste in the compartment. Because of the circular motion, a more uniform distribution of the thermal load will occur, with heat being diverted from the hot end of the compartment to its cold end. Also. the retention time of the waste in the compartment may be controlled simply by varying the velocity of the transport means.

In order to optimize the capacity of the apparatus, it is preferred that for controlling the temperature in the waste incineration compartment, cement raw meal is introduced into the compartment via a cement raw meal inlet. The supplied raw meal will serve as a heat reservoir ensuring that the temperature is sustained at the target level even subject to fluctuations during incineration process between an exothermal process and an endothermal process, and conversely. Thus, the compartment may incorporate an inlet for introducing raw meal from the preheater, calciner and/or raw meal store.

To ensure limited energy consumption and a high oxygen content in the airstream, it is preferred that the hot airstream being fed to the compartment is extracted from the clinker cooler. In certain instances where, for example, the kiln comprises a bypass system for ventilation of volatile compounds, a small amount of the hot air fed to the compartment may also advantageously be extracted from the bypass system.

It is preferred that the exhaust gases produced during the waste incineration process are fed to the calciner of the preheater for calcination of the cement raw meal. As a consequence hereof, any undesirable combustion products, CO, soot etc. will be decomposed in the calciner subject to simultaneous incineration of the ordinary fuel in the calciner.

The slag generated during the waste incineration process and any unbumed waste are preferably extracted from the compartment through its outlet and directed into the calciner.

In event of risk of overheating and/or explosion, it will not be possible to interrupt the incineration process in the compartment instantaneously as is possible in a traditional burner, and, for this reason, it is preferred that cold raw meal from a raw meal store or a dedicated emergency hopper may be supplied to the compartment under such circumstances. Also it is preferred that the cold raw meal is fed to the compartment in a quantity which is sufficient to cool the waste and to shield it against the impact of the hot airstream.

In a preferred embodiment of the invention the supporting surface comprises a rotary disc which simultaneously serves as a means for transporting the waste through the compartment.

In the preferred embodiment the apparatus also comprises a scraper mechanism for expelling the slag generated during the waste incineration process as well as any unburned waste from the compartment at its outlet and into the calciner.

The rotary disc may partially or wholly constitute the bottom of the compartment.

The rotary disc may be configured for rotation about a substantially vertical axis which extends through its centre. The axis may be inclined relative to the vertical level, substantially between 1 and 10 degrees. So, if the rotary disc is made to slope slightly towards the outlet of the compartment, this will improve the rate of extraction of slag and waste residue from the compartment and the diversion into the calciner.

To avoid circulation of the air in the compartment, the latter preferably comprises a gas-tight, stationary partition wall which is mounted at the path of rotation between the outlet and inlet of the compartment, extending from the side wall of the compartment to the axis of rotation of the rotary disc.

The rotary disc preferably comprises a ceramic material.

In an alternative embodiment of the invention the supporting surface may be stationary and the means for transporting the waste through the compartment may comprise an element rotating about an axis which extends perpendicularly to the supporting surface. In this embodiment the transport means preferably comprises a scoop wheel equipped with at least two scoops.

The invention will now be described in further detail with reference to the accompanying drawings in which:
Fig. 1 shows an apparatus according to the invention,
Fig. 2 shows a detail of a preferred embodiment of the invention,
Fig. 3 shows a top view of the detail shown in Fig. 2,
Fig. 4 shows a detail of an alternative embodiment of the invention, and
Fig. 5 shows a top view of the detail shown in Fig. 4.

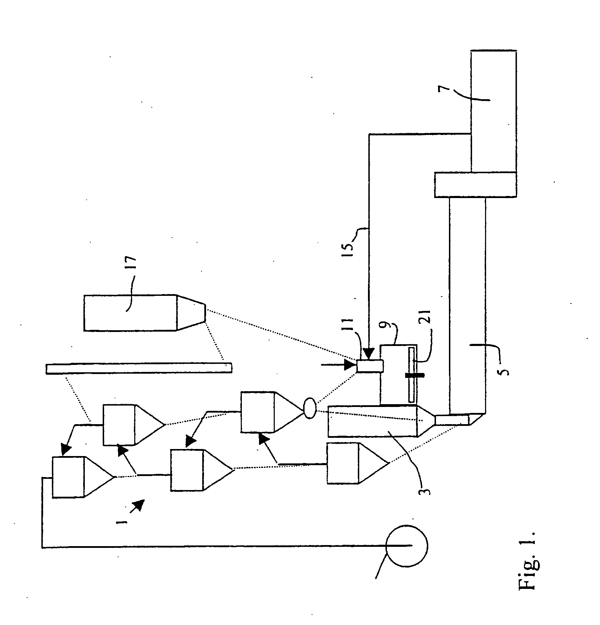

Fig. 1 shows an apparatus for manufacturing cement clinker. The apparatus includes a cyclone preheater 1 with calciner 3, a rotary kiln 5, a clinker cooler 7 and a compartment 9 for incineration of waste which is introduced via an opening 11 in the compartment. During operation the cement raw meal is directed from a raw meal store 17 to the raw meal inlet F of the preheater 1. The raw meal is subsequently directed towards the rotary kiln 5 through the cyclones of the preheater 1 and the calciner 3 in counterflow to hot exhaust gases from the rotary kiln 5, thereby causing the raw meal to be heated and calcined. In the rotary kiln 5 the calcined raw meal is burned into cement clinker which is cooled in the subsequent clinker cooler 7 by means of atmospheric air. Some of the air thus heated is routed from the clinker cooler 7 via a duct 15 to the compartment 9.

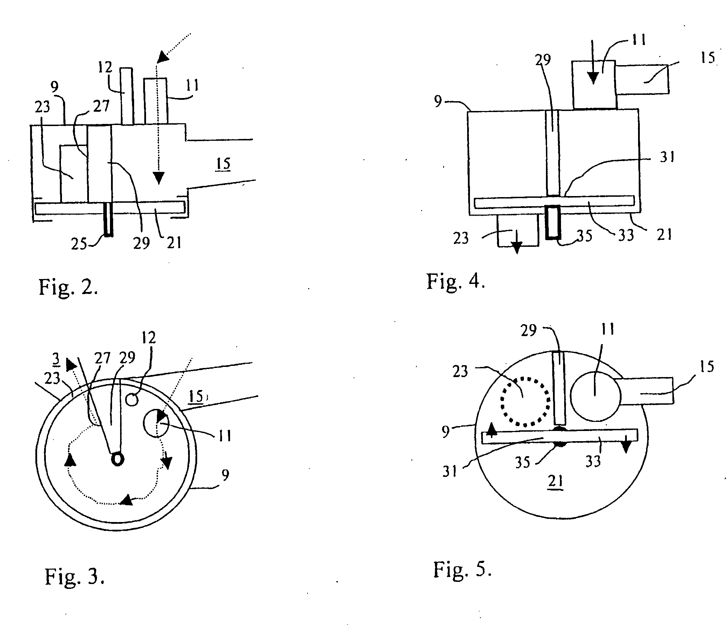

Waste is introduced via the waste inlet 11 on a supporting surface 21 (see Figure 2) in the compartment 9, whereafter the waste is ignited and incinerated while, at the same time, the waste is transported to the outlet 23 of the compartment along a circular path.

For controlling the temperature in compartment 9, the compartment is further seen to incorporate an inlet 12, see Figs. 2 and 3, for introducing cement raw meal from the preheater, calciner and/or raw meal store.

In the embodiment shown in Figs. 2 and 3, the supporting surface is made up of a rotary disc 21 which rotates about an axis 25 and which constitutes the bottom of the compartment 9. In order to direct the incineration residues in the form of slag and possibly unburned waste through the outlet 23 of the compartment and into the calciner 3, the compartment 9 comprises a scraper mechanism 27.

In this embodiment, waste is dumped via the inlet 11 onto the rotary disc 21. From here the waste is transported as shown by means of the arrows in a circular path to the outlet 23 of compartment 9 where the scraper mechanism 27 will ensure that all material on the rotary disc is pushed over the edge and into the calciner 3 where sorting takes place, causing small particles to drift upwards in the calciner while large particles flow downstream to the kiln or are disintegrated. Hence the mineral constituents of the waste are effectively blended into the raw meal components.

As illustrated, the compartment also comprises a gas-tight, stationary partition wall 29 which is mounted in the path of rotation between the outlet 23 of the compartment and inlet 11. The partition wall, which is an integral part of the scraper embodiment 27 in the illustrated embodiment, extends from the side wall of the compartment through to the axis of rotation of the rotary disc, thereby ensuring that the hot airstream from the clinker cooler flows across the waste following almost the same path, only at a much higher velocity. As a consequence thereof, the exhaust gases produced during incineration are expelled from the compartment and diverted into the calciner where they are utilized for calcination of cement raw meal.

The retention time of the waste in the compartment may be controlled simply by regulating the speed of rotation of the rotary disc. Significant advantages may be gained by operating at a high velocity for a short period of time followed by an idle period of prolonged duration or by operation at high velocity, separated by shorter periods in reverse mode of operation. The different modes of separation allow the retention time of the waste to be varied to ensure complete incineration of the waste material.

Figs. 4 and 5 show an alternative embodiment in which the supporting surface 21 is stationary. In this embodiment the means for transporting the waste through the compartment preferably comprises of a scoop wheel 31 with at least two scoops 33 which rotate about an axis 35 extending perpendicularly to the supporting surface.

In the event of there being a risk of overheating and/or explosion in the compartment 9, cold raw meal from a raw meal store 17 or a dedicated emergency hopper can be fed to the compartment. The cold raw meal should preferably be supplied in a quantity which is sufficient for cooling the waste and to shield it against the impact of the hot airstream from the clinker cooler 7.

Waste, raw meal and hot air can be introduced into the compartment 9 via one and the same inlet, for example the inlet 11, as shown in Figs. 1, 4 and 5.

## Claims

1. A method for incineration of combustible waste during the manufacture of cement clinker where cement raw meal is preheated and calcined in a preheater (1) with a calciner (3), burned into clinker in a kiln (5) and cooled in a subsequent clinker cooler (7), in which method the waste is incinerated in a separate compartment (9) subject to simultaneous suppiy of hot air, the exhaust gases produced during the waste incineration process being vented to the preheater for heating the cement raw meal, and the slag generated during the waste incineration process being extracted from the compartment, **characterized in that** the waste is introduced via a waste inlet (11) onto a supporting surface (21) incorporated in the compartment (9) and **in that**, during incineration, the waste is transported through the compartment to the outlet (23) of the compartment along a circular path.

2. A method according to claim 1, **characterized in that** for controlling the temperature in the waste incineration compartment (9), cement raw meal is introduced into the compartment (9) via a cement raw meal inlet (12).

3. A method according to claim 1, **characterized in that** the hot airstream being fed to the compartment is extracted from the clinker cooler (7).

4. A method according to claim 1, **characterized in that** the exhaust gases produced during the waste incineration process are fed to the calciner (3) of the preheater (1) for calcination of the cement raw meal.

5. A method according to claim 1, **characterized in that** the slag generated during the waste incineration process and any unburned waste are extracted from the compartment (9) through its outlet (23) and directed into the calciner (3).

6. A method according to claim 1, **characterized in that** cold raw meal is supplied to the compartment (9) in event of there being a risk of overheating and/or explosion.

7. A method according to claim 6, **characterized in that** the cold raw meal is fed to the compartment (9) in a quantity which is sufficient to cool the waste and to shield it against the impact of the hot airstream.

8. Apparatus for incineration of combustible waste comprising a raw meal store (17), a preheater (1) with a calciner (3), a kiln (5), a clinker cooler (7), a compartment (9) for incineration of the waste, and an air duct (15) for supplying hot air to the compartment (9), which compartment comprises an inlet (11) for introducing the waste into the compartment and an outlet (23) for extracting slag and any unburned waste, **characterized in that** the compartment further comprises a supporting surface (21) for supporting the waste during incineration and means (21,31) for transporting the waste from the waste inlet (11) to the outlet (23) of the compartment along a circular path.

9. Apparatus according to claim 8, **characterized in that** the compartment (9) comprises an inlet (12) for introducing raw meal from the preheater (1), calciner (3) and/or raw meal store (17).

10. Apparatus according to claim 8 or 9, **characterized in that** the supporting surface comprises a rotary disc (21) which also serves as the means for transporting the waste through the compartment (9).

11. Apparatus according to claim 10, **characterized by** a scraper mechanism (27) for expelling the slag generated during the waste incineration process as well as any unburned waste from the compartment (9) through its outlet (23) and into the calciner (3).

12. Apparatus according to claim 10, **characterized in that** the rotary disc (21) constitutes the bottom of the compartment.

13. Apparatus according to claim 10, **characterized in that** the rotary disc (21) is configured for rotation about a substantially normal axis (25) which extends through its centre, and which is inclined relative to the vertical, substantially between 1 and 10 degrees.

14. Apparatus according to claim 10, **characterized in that** the compartment (9) comprises a gas-tight, stationary partition wall (29) which is mounted in the path of rotation between the outlet(23)and inlet (11) of the compartment, extending from the side wall of the compartment to the axis (25) of rotation of the rotary disc.

15. Apparatus according to any of the proceeding claims, **characterized in that** the rotary disc (21) comprises a ceramic material.

16. Apparatus according to claim 8 or 9, **characterized in that** the supporting surface (21) is stationary and the means for transporting the waste through the compartment comprises an element (31) rotating about an axis (35) which extends perpendicularly to the supporting surface.

17. Apparatus according to claim 16, **characterized in that** the transport means comprises a scoop wheel (31) equipped with at least two scoops (33).

## Patentansprüche

1. Verfahren zum Veraschen von verbrennbarem Abfall während der Herstellung von Zementklinker, bei dem Zementrohmehl in einem Vorwärmer (1) mit einem Kalzinierofen (3) vorgewärmt und kalziniert wird, in einem Brennofen (5) zu Klinker gebrannt wird und in einem nachfolgenden Klinkerkühler (7) gekühlt wird, wobei in dem Verfahren der Abfall in einer separaten Kammer (9), welche unter gleichzeitigem Zustrom von heißer Luft steht, verascht wird, wobei die während dem Abfallveraschungsprozzess produzierten Ausstoßgase an den Vorwärmer zum Aufwärmen des Zementrohmehls entlüftet werden und die während dem Abfallveraschungsprozess erzeugte Schlacke der Kammer entzogen wird, **dadurch gekennzeichnet, dass** der Abfall über einen Abfalleinlass (11) auf eine in der Kammer (9) beinhaltete Stützoberfläche (21) eingeführt wird und dass der Abfall während Veraschung durch die Kammer entlang eines kreisförmigen Weges zum Auslass (23) der Kammer transportiert wird.

2. Verfahren nach Anspruch 1, **dadurch gekennzeichnet, dass** zum Steuern der Temperatur in der Abfallveraschungskammer (9) Zementrohmehl in die Kammer (9) über einen Zementrohmehleinlass (12) eingeführt wird.

3. Verfahren nach Anspruch 1, **dadurch gekennzeichnet, dass** der der Kammer zugeführte heiße Luftstrom dem Klinkerkühler (7) entzogen wird.

4. Verfahren nach Anspruch 1, **dadurch gekennzeichnet, dass** die während dem Abfallveraschungsprozess produzierten Ausstoßgase dem Kalzinierofen (3) des Vorwärmers (1) zum Kalzinieren des Zementrohmehls zugeführt werden.

5. Verfahren nach Anspruch 1, **dadurch gekennzeichnet, dass** die während dem Abfallveraschungsprozess erzeugte Schlacke und jeglicher unverbrannte Abfall der Kammer (9) durch ihren Auslass (23) entzogen werden und in den Kalzinierofen (3) gelenkt werden.

6. Verfahren nach Anspruch 1, **dadurch gekennzeichnet, dass** kaltes Rohmehl der Kammer (9) in dem Fall, in dem ein Riskio von Überhitzung und / oder Explosion besteht, zugeführt wird.

7. Verfahren nach Anspruch 6, **dadurch gekennzeichnet, dass** das kalte Rohmehl der Kammer (9) in einer Menge zugeführt wird, welche ausreichend ist, um den Abfall zu kühlen und ihn gegen den Einfluss des heißen Luftstromes abzuschirmen.

8. Vorrichtung zum Veraschen von verbrennbarem Abfall mit einem Rohmehlspeicher (17), einem Vorwärmer (1) mit einem Kalzinierofen (3), einem Brennofen (5), einem Klinkerkühler (7), einer Kammer (9) zum Veraschen des Abfalls und einer Luftleitung (15) zum Zuführen heißer Luft in die Kammer, wobei die Kammer einen Einlass (11) zum Einführen des Abfalls in die Kammer und einen Auslass (23) zum Entziehen von Schlacke und von jeglichem unverbrannten Abfall aufweist, **dadurch gekennzeichnet, dass** die Kammer weiterhin eine Stützoberfläche (21) zum Stützen des Abfalls während der Veraschung und eine Einrichtung (21, 31) zum Transportieren des Abfalls von dem Abfalleinlass (11) zu dem Auslass (23) der Kammer entlang eines kreisförmigen Weges aufweist.

9. Vorrichtung nach Anspruch 8, **dadurch gekennzeichnet, dass** die Kammer (9) einen Einlass (12) zum Einführen von Rohmehl von dem Vorwärmer (1), dem Kalzinierofen (3) und / oder dem Rohmehlspeicher (17) aufweist.

10. Vorrichtung nach Anspruch 8 oder 9, **dadurch gekennzeichnet, dass** die Stützoberfläche eine Drehscheibe (21) aufweist, welche auch als die Einrichtung zum Transportieren des Abfalls durch die Kammer (9) dient.

11. Vorrichtung nach Anspruch 10, **gekennzeichnet durch** einen Kratzermechanismus (27) zum Entfernen der während dem Abfallveraschungsprozess erzeugten Schlacke als auch von jeglichem unverbrannten Abfall aus der Kammer (9) **durch** ihren Auslass (23) und in den Kalzinierofen (3) hinein.

12. Vorrichtung nach Anspruch 10, **dadurch gekennzeichnet, dass** die Drehscheibe (21) den Boden der Kammer bildet.

13. Vorrichtung nach Anspruch 10, **dadurch gekennzeichnet, dass** die Drehscheibe (21) zum Drehen um eine im wesentlichen normale Achse (25), welche sich im wesentlichen durch ihr Zentrum erstreckt und welche relativ zur Vertikalen geneigt ist, im wesentlichen zwischen 1 und 10 Grad, ausgestaltet ist.

14. Vorrichtung nach Anspruch 10, **dadurch gekennzeichnet, dass** die Kammer (9) eine sich von der Seitenwand der Kammer bis zur Drehachse (25) der Drehscheibe erstreckende gasdichte, ortsfeste Trennwand (29) aufweist, welche in dem Rotationsweg zwischen dem Auslass (23) und dem Einlass (11) der Kammer befestigt ist.

15. Vorrichtung nach einem der vorausgehenden Ansprüche, **dadurch gekennzeichnet, dass** die Drehscheibe (21) ein keramisches Material aufweist.

16. Vorrichtung nach Anspruch 8 oder 9, **dadurch gekennzeichnet, dass** die Stützfläche (21) ortsfest ist und die Einrichtung zum Transportieren des Abfalls durch die Kammer ein um eine sich senkrecht zur Stützfläche erstreckene Achse (35) drehendes Element (31) aufweist.

17. Vorrichtung nach Anspruch 16, **dadurch gekennzeichnet, dass** die Transporteinrichtung ein mit mindestens zwei Schaufeln (33) ausgestattetes Schaufelrad (31) aufweist.

## Revendications

1. Procédé pour l'incinération de déchets combustibles lors de la production de clinker de ciment, dans lequel la farine crue de ciment est préchauffée et calcinée dans un four de préchauffe (1) avec un four de calcination (3), brûlée pour former du clinker dans un four de cuisson (5) et refroidie dans un refroidisseur de clinker (7) subséquent, procédé dans lequel les déchets sont incinérés dans un compartiment séparé (9) soumis simultanément à une alimentation en air chaud, les gaz d'échappement produits pendant l'opération d'incinération des déchets étant évacués vers le four de préchauffe pour chauffer la farine crue de ciment, et le laitier produit pendant l'opération d'incinération des déchets étant extrait du compartiment, **caractérisé en ce que** les déchets sont introduits, par un orifice d'admission de déchets (11), sur une surface porteuse (21) incorporée dans le compartiment (9) et **en ce que**, pendant l'incinération, les déchets sont transportés à travers le compartiment vers l'orifice d'évacuation (23) du compartiment le long d'un chemin circulaire.

2. Procédé selon la revendication 1, **caractérisé en ce que**, pour réguler la température dans le compartiment d'incinération des déchets (9), on introduit la farine crue de ciment dans le compartiment (9) par un orifice d'admission de farine crue de ciment (12).

3. Procédé selon la revendication 1, **caractérisé en ce que** le courant d'air chaud amené au compartiment est extrait du refroidisseur de clinker (7).

4. Procédé selon la revendication 1, **caractérisé en ce que** les gaz d'échappement produits pendant l'opération d'incinération des déchets sont amenés au four de calcination (3) du four de préchauffe (1) pour la calcination de la farine crue de ciment.

5. Procédé selon la revendication 1, **caractérisé en ce que** le laitier produit pendant l'opération d'incinération des déchets et tous les déchets imbrûlés sont extraits du compartiment (9) à travers son orifice d'évacuation (23) et dirigés vers le four de calcination (3).

6. Procédé selon la revendication 1, **caractérisé en ce que** la farine crue de ciment est amenée dans le compartiment (9) dans le cas où il y a un risque de surchauffe et/ou d'explosion.

7. Procédé selon la revendication 6, **caractérisé en ce que** la farine crue de ciment est amenée dans le compartiment (9) en une quantité qui est suffisante pour refroidir les déchets et pour les protéger contre l'impact du flux d'air chaud.

8. Appareil pour l'incinération de déchets combustibles comprenant un réservoir de farine crue (17), un four de préchauffe (1) avec un four de calcination (3), un four de cuisson (5), un refroidisseur de clinker (7), un compartiment (9) pour l'incinération des déchets et une conduite d'air (15) pour amener l'air chaud dans le compartiment (9), lequel compartiment (9) comprend un orifice d'admission (11) pour introduire les déchets dans le compartiment et un orifice d'évacuation (23) pour extraire le laitier et tous les déchets imbrûlés, **caractérisé en ce que** le compartiment comprend, en outre, une surface porteuse (21) pour porter les déchets pendant l'incinération et des moyens (21, 31) pour transporter les déchets entre l'orifice d'admission des déchets (11) et l'orifice d'évacuation (23) du compartiment le long d'un chemin circulaire.

9. Appareil selon la revendication 8, **caractérisé en ce que** le compartiment (9) comprend un orifice d'admission (12) pour introduire la farine crue provenant du four de préchauffe (1), du four de calcination (3) et/ou du réservoir de farine crue (17).

10. Appareil selon la revendication 8 ou 9, **caractérisé en ce que** la surface porteuse comprend un disque rotatif (21) qui sert également comme moyen de transport des déchets à travers le compartiment (9).

11. Appareil selon la revendication 10, **caractérisé par** un mécanisme racleur (27) pour expulser le laitier produit pendant l'opération d'incinération des déchets ainsi que tous les déchets imbrûlés du compartiment (9) à travers son orifice d'évacuation (23) et dans le four de calcination (3).

12. Appareil selon la revendication 10, **caractérisé en ce que** le disque rotatif (21) constitue le fond du compartiment.

13. Appareil selon la revendication 10, **caractérisé en ce que** le disque rotatif (21) est configuré pour tourner autour d'un axe sensiblement normal (25) qui s'étend à travers son centre et qui est incliné par rapport à la verticale, sensiblement entre 1 et 10 degrés.

14. Appareil selon la revendication 10, **caractérisé en ce que** le compartiment (9) comprend une paroi de séparation (29) fixe, étanche aux gaz, qui est montée sur le parcours de rotation entre l'orifice d'évacuation (23) et l'orifice d'admission (11) du compartiment, s'étendant entre la paroi latérale du compartiment et l'axe (25) de rotation du disque rotatif.

15. Appareil selon l'une quelconque des revendications précédentes, **caractérisé en ce que** le disque rotatif (21) comprend un matériau céramique.

16. Appareil selon la revendication 8 ou 9, **caractérisé en ce que** la surface porteuse (21) est fixe et **en ce que** le moyen de transport des déchets à travers le compartiment comprend un élément (31) tournant autour d'un axe (35) qui s'étend perpendiculairement à la surface porteuse.

17. Appareil selon la revendication 16, **caractérisé en ce que** le moyen de transport comprend une roue à auges (31) équipée d'au moins deux auges (33).
